(19) Europäisches Patentamt
European Patent Office
Office européen des brevets

(11) **EP 1 047 728 B1**

(12) **EUROPÄISCHE PATENTSCHRIFT**

(45) Veröffentlichungstag und Bekanntmachung des Hinweises auf die Patenterteilung:
**09.02.2005 Patentblatt 2005/06**

(21) Anmeldenummer: **99907353.9**

(22) Anmeldetag: **05.01.1999**

(51) Int Cl.[7]: **C08L 69/00**, C08K 5/523, C08K 3/00

(86) Internationale Anmeldenummer:
**PCT/EP1999/000024**

(87) Internationale Veröffentlichungsnummer:
**WO 1999/036474 (22.07.1999 Gazette 1999/29)**

(54) **FLAMMWIDRIGE POLYCARBONAT-ABS-FORMMASSEN**

FLAME-RESISTANT POLYCARBONATE ABS MOULDING COMPOUNDS

MATIERES MOULEES IGNIFUGEES, CONSTITUEES DE POLYCARBONATE ET D'ABS

(84) Benannte Vertragsstaaten:
**BE CH DE DK ES FR GB IT LI NL**

(30) Priorität: **15.01.1998 DE 19801198**

(43) Veröffentlichungstag der Anmeldung:
**02.11.2000 Patentblatt 2000/44**

(73) Patentinhaber: **Bayer MaterialScience AG
51368 Leverkusen (DE)**

(72) Erfinder:
- **ECKEL, Thomas
D-41540 Dormagen (DE)**
- **ZOBEL, Michael
D-40547 Düsseldorf (DE)**
- **WITTMANN, Dieter
D-51375 Leverkusen (DE)**
- **JANKE, Nikolaus
D-41539 Dormagen (DE)**

(56) Entgegenhaltungen:
**EP-A- 0 363 608**
**EP-A- 0 640 655**
**EP-A- 0 761 746**
**WO-A-98/53002**
**WO-A-99/07782**

**EP 1 047 728 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft Polycarbonat-ABS-Formmassen mit einer ausgezeichneten Flammfestigkeit, die als Flammschutzmittelkombination oligomere Phosphorverbindungen mit einem durchschnittlichen Polykondensationsgrad von >5 und anorganische Nanopartikeln und/oder Monophosphate enthalten.

In EP-A 0 640 655 werden Formmassen aus aromatischen Polycarbonaten, styrolhaltigen Copolymerisaten und Pfropfpolymerisaten beschrieben, die mit monomeren und oligomeren Phosphorverbindungen mit Polykondensationsgrad von 1 bis 2 flammwidrig ausgerüstet werden können.

In EP-A 0 363 608 werden flammwidrige Polymermischungen aus aromatischen Polycarbonaten, styrolhaltigen Copolymeren oder Pfropfcopolymeren sowie oligomeren Phosphaten als Flammschutzadditive beschrieben. Um eine ausreichende Flammwidrigkeit zu erzielen, muß der Polykondensationsgrad der Phosphorverbindungen im Bereich von 1,2 bis 1,7 liegen. Beispiele belegen, daß bei einem Polykondensationsgrad von 2,8 ein ungenügender Flammschutz resultiert.

In der EP-A 0 103 230 werden Formmassen aus speziellen Polycarbonaten, styrolhaltigen Copolymeren oder Pfropfcopolymeren beschrieben, die ebenfalls mit Polyphosphaten flammfest ausgerüstet werden können. Die zum Einsatz kommenden Polyphosphate haben bevorzugt einen Polykondensationsgrad von 4 bis 25, wobei, um eine ausreichende Flammfestigkeit zu erzielen, entweder ein zweites halogenhaltiges Flammschutzmittel in Kombination mit den Polyphosphaten verwendet werden muß oder die Polyphosphate in relativ großen Mengen eingesetzt werden müssen.

Aufgabe der vorliegenden Erfindung war es daher, flammwidrige Polycarbonat-ABS-Formmassen herzustellen, die mit Phosphorverbindungen mit einem möglichst hohen durchschnittlichen Polykondensationsgrad in üblichen Mengen hervorragend flammfest ausgerüstet werden können, um die Neigung der Flammschutzmittel, während der Verarbeitung an die Oberfläche zu migrieren, so gering wie möglich zu halten. Außerdem sollten die Polycarbonat-ABS-Formmassen über gute mechanische Eigenschaften verfügen.

Überraschenderweise gelingt dies durch den Einsatz von oligomeren Phosphorverbindungen, vorzugsweise Phosphatverbindungen, mit einem Polykondensationsgrad >5 in üblichen Mengen in Kombination mit anorganischen Nanopartikeln und/oder Monophosphorverbindungen.

Gegenstand der vorliegenden Erfindung sind daher flammwidrige thermoplastische Formmassen gemäß Anspruch 1 und 2 enthaltend

A. 5 bis 95, vorzugsweise 30 bis 90 Gew.-Teile, besonders bevorzugt 50 bis 80 Gew.-Teile eines aromatischen Polycarbonats oder Polyestercarbonats,

B. 0,5 bis 60, vorzugsweise 1 bis 40 Gew.-Teile, besonders bevorzugt 2 bis 25 Gew.-Teile, wenigstens eines Pfropfpolymerisats von

B.1 5 bis 95, vorzugsweise 30 bis 80 Gew.-% eines oder mehrerer Vinylmonomeren auf

B.2 95 bis 45, vorzugsweise 70 bis 30 Gew.-% einer oder mehrerer Pfropfgrundlagen mit einer Glasumwandlungstemperatur <10°C, vorzugsweise <0°C, besonders bevorzugt < -20°C,

C. 0 bis 45, vorzugsweise 0 bis 30, besonders bevorzugt 2 bis 25 Gew.-Teile thermoplastisches V inylcopolymerisat,

D. 0,5 bis 20 Gew.-Teile, vorzugsweise 1 bis 18 Gew.-Teile, besonders bevorzugt 2 bis 15 Gew.-Teile, wenigstens einer Phosphorverbindung der allgemeinen Formel (I)

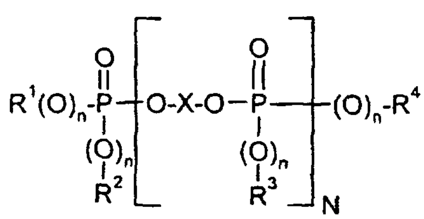

(I)

worin

$R^1$, $R^2$, $R^3$ und $R^4$ unabhängig voneinander, jeweils gegebenenfalls halogeniertes $C_1$- bis $C_8$-Alkyl, $C_5$- bis

$C_6$-Cycloalkyl, $C_6$- bis $C_{20}$-Aryl oder $C_7$- bis $C_{12}$-Aralkyl,

n unabhängig voneinander 0 oder 1, vorzugsweise 1,

N eine Zahl von 5 bis 30, vorzugsweise von 5,5 bis 20, besonders bevorzugt von 6 bis 10 bedeuten,
wobei bei Mischungen oligomerer Phosphorverbindungen der durchschnittliche Polykondensationsgrad N der Komponente D >5, ist,

X einen gegebenenfalls substituierten ein- oder mehrkernigen aromatischen Rest mit 6 bis 30 C-Atomen bedeuten,

E. 0 bis 5 Gew.-Teile, vorzugsweise 0,15 bis 1 Gew.-Teil, besonders bevorzugt 0,1 bis 0,5 Gew.-Teile eines fluorierten Polyolefins, und

F.1 0,5 bis 40, vorzugsweise 1 bis 25, besonders bevorzugt 2 bis 15 Gew.-Teile eines feinstteiligen anorganischen Pulvers mit einem durchschnittlichen Teilchendurchmesser von kleiner gleich 200 nm, und/oder

F.2 0,5 bis 20, vorzugsweise 1 bis 18, besonders bevorzugt 2 bis 15 Gew.-Teile einer Monophosphorverbindung der Formel (IA)

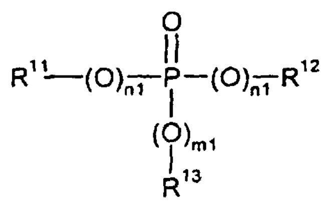

(IA),

worin

$R^{11}$, $R^{12}$ und $R^{13}$ unabhängig voneinander gegebenenfalls halogeniertes $C_1$- $C_8$-Alkyl oder gegebenenfalls halogeniertes $C_6$-$C_{20}$-Aryl,

m1 0 oder 1 und

n1 0 oder 1 bedeuten,

wobei die Summe aller Gew.-Teile A+B+C+D+E+F 100 ergibt.

Ganz besonders bevorzugt sind auch Formmassen, in denen das Gewichtsverhältnis der Komponenten B: C, sofern C vorhanden ist, zwischen 2:1 und 1:4, vorzugsweise zwischen 1: 1 und 1:3 liegt.

## Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarobonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z. B. DE-OS 3 077 934).

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielseise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (II)

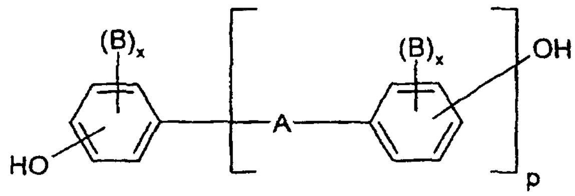

(II)

wobei

A eine Einfachbindung, $C_1$-$C_5$-Alkylen, $C_2$-$C_5$-Alkyliden, $C_5$-$C_6$-Cycloalkyliden, -O-, -SO-, -CO-, -S-, $-SO_2-$, ein $C_6$-$C_{12}$-Arylenrest, der mit weiteren gegebenenfalls Heteroatome enthaltenden Ringen kondensiert sein kann, ein Rest der Formel (III)

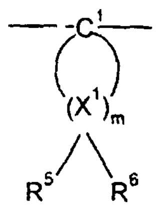

(III)

oder ein Rest der Formel (IV)

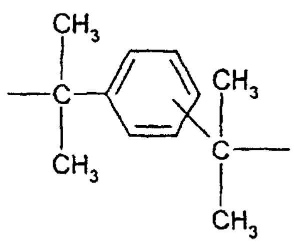

(IV)

die Reste B, unabhängig voneinander, jeweils einen $C_1$-$C_8$-Alkylrest, vorzugsweise Methyl, ein Halogen, vorzugsweise Chlor und/oder Brom, einen $C_6$-$C_{10}$-Aryl-, vorzugsweise Phenyl-, $C_7$-$C_{12}$-Aralkyl-Rest, vorzugsweise Benzyl,

x jeweils unabhängig voneinander 0, 1 oder 2,

p 1 oder 0 sind, und

$R^5$ und $R^6$ für jedes $X^1$ individuell wählbar, unabhängig voneinander Wasserstoff oder $C_1$-$C_6$-Alkyl, vorzugsweise Wasserstoff, Methyl oder Ethyl,

$X^1$ Kohlenstoff und

m eine ganze Zahl von 4 bis 7, bevorzugt 4 oder 5 bedeuten, mit der Maßgabe, daß an mindestens einem Atom $X^1$, $R^5$ und $R^6$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxylphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kembromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenyl-sulfon sowie deren di- und tetrabromierte oder chlorierte Derviate wie beispielsweise 2,2-Bis-(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte ($M_w$, gemessen z. B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an ≥ drei-funktionellen Verbindungen, beispielsweise solchen mit ≥ drei phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.% (bezogen auf die Gesamtmenge an einzusetzenden Diphenolen), Polydiorganosiloxane mit Hydroxy-aryloxy-Endgruppen eingesetzt werden. Diese sind bekannt (siehe beispielseise aus US-Patent 3 419 634) bzw. nach literaturbekannten Verfahren herstellbar. Die Herstellung Polydiorganosiloxan-haltiger Copolycarbonate wird z. B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenole, insbesondere an 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$-$C_{22}$-Alkylgruppen oder durch Halogenatome substituiert sein können, sowie aliphatische $C_2$-$C_{22}$-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und im Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-OS 2 940 024 und DE-OS 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen.

Sowohl der Ester- als auch der Carbonatanteil der aromatischen Polyestercarbonate kann in Form von Blökken oder statistisch verteilt im Polykondensat vorliegen.

Die relative Lösungsviskosität ($\eta_{rel}$) der aromatischen Polycarbonate und Polyestercarbonate liegt im Bereich 1,18 bis 1,4, vorzugsweise 1,22 bis 1,3 (gemessen an Lösungen von 0,5 g Polycarbonat oder Polyestercarbonat in 100 ml $CH_2Cl_2$-Lösung bei 25°C).

Die thermoplastischen, aromatischen Polycarbonate und Polyestercarbonate können allein oder im beliebigen Gemisch untereinander eingesetzt werden.

**<u>Komponente B</u>**

Die Komponente B umfaßt ein oder mehrere Pfropfpolymerisate von

B.1 5 bis 95, vorzugsweise 30 bis 80 Gew.-%, wenigstens eines Vinylmonomeren auf

B.2 95 bis 5, vorzugsweise 70 bis 20 Gew.-% einer oder mehrerer Pfropfgrundlagen mit Glasübergangstemperaturen <10°C, vorzugsweise <0°C, besonders bevorzugt < -20°C.
Die Pfropfgrundlage B.2 hat im allgemeinen eine mittlere Teilchengröße ($d_{50}$-Wert) von 0,05 bis 5 µm, vorzugsweise 0,10 bis 0,5 µm, besonders bevorzugt 0,20 bis 0,40 µm.

Monomere B.1 sind vorzugsweise Gemische aus

B.1.1 50 bis 99 Gew.-Teilen Vinylaromaten und/oder kernsubstituierten Vinylaromaten (wie beispielsweise Styrol, α-Methylstyrol, p-Methylstyrol, p-Chlorstyrol) und/oder Methacrylsäute-($C_1$-$C_4$)-Alkylester (wie z.B. Methylmethacrylat, Ethylmethacrylat) und

B.1.2 1 bis 50 Gew.-Teilen Vinylcyanide (ungesättigte Nitrile wie Acrylnitril und Methacrylnitril) und/oder (Meth)Acrylsäure-($C_1$-$C_8$)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat.

Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D) M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen B.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, daß die Glasübergangstemperatur der Komponente B.2 unterhalb <10°C, vorzugsweise <0°C, besonders bevorzugt < -10°C liegt.

Besonders bevorzugt ist reiner Polybutadienkautschuk.

Besonders bevorzugte Polymerisate B sind z.B. ABS-Polymerisate (Emulsions-, Masse- und Suspensions-ABS), wie sie z. B. in der DE-OS 2 035 390 (=US-PS 3 644 574) oder in der DE-OS 2 248 242 (=GB-PS 1 409 275) bzw. in Ullmann, Enzyklopädie der Technischen Chemie, Bd. 19 (1980), S. 280 ff. beschrieben sind. Der Gelanteil der Pfropfgrundlage B.2 beträgt mindestens 30 Gew.-%, vorzugsweise mindestens 40 Gew.-% (in Toluol gemessen).

Die Pfropfcopolymerisate B werden durch radikalische Polymerisation, z.B. durch Emulsions-, Suspensions-, Lösungs- oder Massepolymerisation, vorzugsweise durch Emulsionspolymerisation hergestellt.

Besonders geeignete Pfropfkautschuke sind ABS-Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkyl-

ester, wie Chlorethylacrylat sowie Mischungen dieser Monomeren.

Zur Vemetzung können Monomere mit mehr als einer polymerisierbaren Doppelbindung copolymerisiert werden. Bevorzugte Beispiele für vemetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinylund Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vemetzten Monomere beträgt vorzugsweise 0,02 bis 5, insbesondere 0,05 bis 2 Gew.-%, bezogen auf die Pfropfgrundlage B.2.

Bei cyclischen vemetzenden Monomeren mit mindestens 3 ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z. B. Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

## <u>Komponente C</u>

Die Komponente C umfaßt ein oder mehrere thermoplastische Vinyl (co)polymerisate.

Geeignet sind als (Co)Polymerisate C Polymerisate von mindestens einem Monomeren aus der Gruppe der Vinylaromaten, Vinylcyanide (ungesättigte Nitrile), (Meth)-Acrylsäure-($C_1$-$C_8$)-Alkylester, ungesättigte Carbonsäuren sowie Derivate (wie Anhydride und Imide) ungesättigter Carbonsäuren. Insbesondere geeignet sind (Co)-Polymerisate aus

C.1 50 bis 99, vorzugsweise 60 bis 80 Gew.-Teilen Vinylaromaten und/oder kern-substituierten Vinylaromaten wie beispielsweise Styrol, $\alpha$-Methylstyrol, p-Methylstyrol, p-Chlorstyrol) und/oder Methacrylsäure-($C_1$-$C_4$)-Alkylester wie z.B. Methylmethacrylat, Ethylmethacrylat), und

C.2 1 bis 50, vorzugsweise 20 bis 40 Gew.-Teilen Vinylcyanide (ungesättigte Nitrile) wie Acrylnitril und Methacrylnitril und/oder (Meth)Acrylsäure-($C_1$-$C_8$)-Alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate C sind harzartig, thermoplastisch und kautschukfrei.

Besonders bevorzugt sind Copolymerisate aus C.1 Styrol und C.2 Acrylnitril.

Die (Co)Polymerisate gemäß C sind bekannt und lassen sich durch radikalische Polymerisation, insbesondere durch Emulsions-, Suspensions-, Lösungs- oder Massepolymerisation herstellen. Die (Co)Polymerisate gemäß Komponente C besitzen vorzugsweise Molekulargewichte $\overline{M}_w$ (Gewichtsmittel, ermittelt durch Lichtstreuung oder Sedimentation) zwischen 15 000 und 200 000.

(Co)Polymerisate gemäß Komponente C entstehen häufig bei der Pfropfpolymerisation der Komponente B als Nebenprodukte, besonders dann, wenn große Mengen Monomere B.1 auf kleine Mengen Kautschuk B.2 gepfropft werden. Die gegebenenfalls erfindungsgemäß auch einzusetzende Menge an C bezieht diese Nebenprodukte der Pfropfpolymerisation von B nicht ein.

Für bestimmte Einsatzzwecke sollte jedoch die Komponente C in den erfindungsgemäßen Formmassen vorliegen.

Liegt die Komponente C in den Formmassen vor, so sollte das Gewichtsverhältnis der Komponenten B:C zwischen 2:1 und 1:4, vorzugsweise zwischen 1:1 und 1:2, liegen, um für bestimmte Einsatzzwecke das gewünschte mechanische Werteniveau zu erreichen.

**Komponente D**

Die Komponente D umfaßt wenigstens eine Phosphorverbindung der Formel (I)

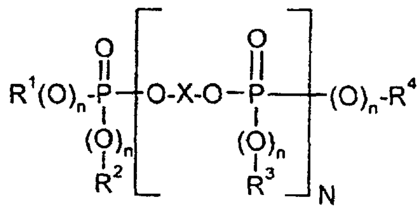

(I)

In der Formel bedeuten $R^1$, $R^2$, $R^3$ und $R^4$ unabhängig voneinander jeweils $C_1$-$C_8$-Alkyl, $C_5$-$C_6$-Cycloalkyl, $C_6$-$C_{12}$-Aryl oder $C_7$-$C_{12}$-Aralkyl, bevorzugt sind $C_6$-$C_{10}$-Aryl oder $C_7$-$C_{12}$-Aralkyl. Die aromatischen Gruppen $R^1$, $R^2$, $R^3$ und $R^4$ können ihrerseits mit Halogen- oder Alkylgruppen substituiert sein. Besonders bevorzugte Aryl-Reste sind Kresyl, Phenyl, Xylenyl, Propylphenyl oder Butylphenyl sowie entsprechende bromierte und chlorierte Derivate davon.

X in der Formel (I) bedeutet einen ein- oder mehrkernigen aromatischen Rest mit 6 bis 30 C-Atomen. Dieser leitet sich von Diphenolen der Formel (II) ab. Bevorzugte Diphenole sind beispielsweise Diphenylphenol, Bisphenol A, Resorcin oder Hydrochinon oder deren chlorierten oder bromierten Derivaten.

n in der Formel (I) kann, unabhängig voneinander 0 oder 1 sein, vorzugsweise ist n gleich 1.

N steht für eine Zahl von 5 bis 30. Im Falle von Mischungen oligomerer Phosphorverbindungen bedeutet N der durchschnittliche Polykondensationsgrad der Komponente D, der immer >5, vorzugsweise von 5,5 bis 20, besonders bevorzugt von 6 bis 10 ist.

**Komponente E**

Die fluorierten Polyolefine E sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser $d_{50}$ von 0,05 bis 1 000, vorzugsweise 0,08 bis 20 µm. Im allgemeinen haben die fluorierten Polyolefine E eine Dichte von 1,2 bis 2,3 g/cm$^3$. Bevorzugte fluorierte Polyolefine E sind Polytetrafluorethylen, Polyvinylidenfluorid, Tetrafluorethylen, Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, Nr. 10 A, Oktober 1970, Mc Graw-Hill, Inc., New York, Seite 134 und 774; "Modern Plastica Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielseise Natrium-, Kalium- oder Ammoniumperoxidisulfat bei Drucken von 7 bis 71 kg/cm$^2$ und bei Temperaturen von 0 bis 200°C, vorzugsweise bei Temperaturen von 20 bis 100°C. (Nähere Einzelheiten s. z. B. US-Patent 2 393 967). Je nach Einsatzform kann die Dichte dieser Materialien zwischen 1,2 und 2,3 g/cm$^3$, die mittlere Teilchengröße zwischen 0,5 und 1 000 µm liegen.

Erfindungsgemäß bevorzugte fluorierte Polyolefine E sind Tetrafluorethylenpolymerisate mit mittleren Teilchendurchmesser von 0,05 bis 20 µm, vorzugsweise 0,08 bis 10 µm, und einer Dichte von 1,2 bis 1,9 g/cm$^3$ und werden vorzugsweise in Form einer koagulierten Mischung von Emulsionen der Tetrafluorethylenpolymerisate E mit Emulsionen der Pfropfpolymerisate B eingesetzt.

Geeignete, in Pulverform einsetzbare fluorierte Polyolefine E sind Tetrafluorethylenpolymerisate mit mittleren Teilchendurchmesser von 100 bis 1 000 µm und Dichten von 2,0 g/cm$^3$ bis 2,3 g/cm$^3$.

Zur Herstellung einer koagulierten Mischung aus B und E wird zuerst eine wäßrige Emulsion (Latex) eines Pfropfpolymerisates B mit einer feinteiligen Emulsion eines Tetraethylenpolymerisates E vermischt; geeignete Tetrafluorethylenpolymerisat-Emulsionen besitzen üblicherweise Feststoffgehalte von 30 bis 70 Gew-.%, insbesondere von 50 bis 60 Gew.-%, vorzugsweise von 30 bis 35 Gew.-%.

Die Mengenangabe bei der Beschreibung der Komponente B kann den Anteil des Pfropfpolymerisats für die koagulierte Mischung aus Pfropfpolymerisat und fluoriertem Polyolefinen einschließen.

In der Emulsionsmischung liegt das Gleichgewichtsverhältnis Pfropfpolymerisat B zum Tetrafluorethylenpolymerisat E bei 95:5 bis 60:40. Anschließend wird die Emulsionsmischung in bekannter Wiese koaguliert, beispielsweise durch Sprühtrocknen, Gefriertrocknung oder Koagulation mittels Zusatz von anorganischen oder organischen

Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handelsübliche Produkte und werden beispielsweise von der Firma DuPont als Teflon® 30 N angeboten.

## Komponente F

Die Komponente F umfaßt sowohl feinstteilige anorganische Pulver F.1 als auch Monophosphorverbindungen F.2 der Formel (IA).

Die erfindungsgemäß zum Einsatz kommenden feinstteiligen anorganischen Pulver F.1 bestehen vorzugsweise aus wenigstens einer polaren Verbindung von einem oder mehreren Metallen der 1. bis 5. Hauptgruppe oder 1. bis 8. Nebengruppe des Periodensystems, bevorzugt der 2. bis 5. Hauptgruppe oder 4. bis 8. Nebengruppe, besonders bevorzugt der 3. bis 5. Hauptgruppe oder 4. bis 8. Nebengruppe, oder aus Verbindungen dieser Metalle mit den Elementen Sauerstoff, Wasserstoff, Schwefel, Phosphor, Bor, Kohlenstoff, Stickstoff oder Silicium bzw. Mischungen davon.

Bevorzugte Verbindungen sind beispielsweise Oxide, Hydroxide, wasserhaltige Oxide, Sulfate, Sulfite, Sulfide, Carbonate, Carbide, Nitrate, Nitrite, Nitride, Borate, Silikate, Phosphate, Hydride, Phosphite oder Phosphonate.

Bevorzugt bestehen die feinstteiligen anorganischen Pulver aus Oxiden, polaren Anionen, Phosphaten, Hydroxiden, vorzugsweise aus $TiO_2$, $SiO_2$, $SnO_2$, ZnO, Böhmit, $ZrO_2$, $Al_2O_3$, Aluminiumphosphate, Eisenoxide, ferner TiN, WC, AlO(OH), $Sb_2O_3$, Eisenoxide, $NaSO_4$, Vanadianoxide, Zinkborat, Silicate wie Al-Silikate, Mg-Silikate, ein-, zwei-, dreidimensionale Silikate. Mischungen und dotierte Verbindungen sind ebenfalls verwendbar.

Desweiteren können diese nanoskaligen Partikel mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen.

Besonders bevorzugt sind hydrathaltige Aluminiumoxide, z.B. Böhmit oder $TiO_2$.

Die durchschnittlichen Teilchendurchmesser der Nanopartikel sind kleiner gleich 200 nm, bevorzugt kleiner gleich 150 nm, insbesondere 1 bis 100 nm.

Teilchengröße und Teilchendurchmesser bedeutet immer den mittleren Teilchendurchmesser $d_{50}$, ermittelt durch Ultrazentrifugenmessungen nach W. Scholtan et al., Kolloid-Z. und Z. Polymere 250 (1972), S. 782-796.

Das anorganische Pulver wird in Mengen von 0,5 bis 40, vorzugsweise 1 bis 25, besonders bevorzugt von 3 bis 15 Gew.-%, bezogen auf das thermoplastische Material in die thermoplastische Formmasse eingearbeitet.

Die anorganischen Verbindungen können als Pulver, Pasten, Sole, Dispersionen oder Suspensionen vorliegen. Durch Ausfällen können aus Dispersionen, Sole oder Suspensionen Pulver erhalten werden.

Die Pulver können nach üblichen Verfahren in die thermoplastischen Formmassen eingearbeitet werden, beispielsweise durch direktes Kneten oder Extrudieren von Formmassen und den feinstteiligen anorganischen Pulvern. Bevorzugte Verfahren stellen die Herstellung eines Masterbatch, z.B. in Flammschutzadditiven und wenigstens einer Komponente der erfindungsgemäßen Formmassen in Monomeren oder Lösungsmitteln, oder die Cofällung von einer thermoplastischen Komponente und den feinstteiligen anorganischen Pulvern, z.B. durch Cofällung einer wäßrigen Emulsion und den feinstteiligen anorganischen Pulvern dar, gegebenenfalls in Form von Dispersionen, Suspensionen, Pasten oder Solen der feinstteiligen anorganischen Materialien.

Die erfindungsgemäßen Polymermischungen können als weitere Flammschutzmittel eine oder mehrere Monophosphorverbindungen der Formel (IA) (Komponente F.2)

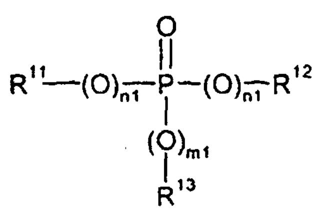

(IA),

enthalten, wobei

| | |
|---|---|
| $R^{11}$, $R^{12}$ und $R^{13}$ | unabhängig voneinander gegebenenfalls halogeniertes $C_1$-$C_8$-Alkyl oder gegebenenfalls halogeniertes $C_6$-$C_{20}$-Aryl, |

m1 oder 1 und

n1 0 oder 1 bedeuten.

Die erfindungsgemäß geeigneten Phosphorverbindungen gemäß Komponente F.2 sind generell bekannt (siehe beispielsweise Ullmanns Enzyklopädie der technischen Chemie, Bd. 18, S. 301 ff, 1979; Houben-Weyl, Methoden der Organischen Chemie, Bd. 12/1, S. 43; Beilstein, Bd. 6, S. 177).

Bevorzugte Substituenten $R^{11}$ bis $R^{13}$ umfassen Methyl, Butyl, Octyl, Chlorethyl, 2-Chlorpropyl, 2,3-Dibrompropyl, Phenyl, Kresyl, Cumyl, Naphthyl, Chlorphenyl, Bromphenyl, Pentachlorphenyl und Pentabromphenyl, Besonders bevorzugt sind Methyl, Ethyl, Butyl, gegebenenfalls durch Methyl, Ethyl, Chlor und/oder Brom substituiertes Phenyl.

Bevorzugte Phosphorverbindungen F.2 umfassen beispielsweise Tributylphosphat, Tris-(2-chlorethyl)-phosphat, Tris-(2,3-dibrompropyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid und Trikresylphosphinoxid.

Der angestrebte Flammschutz der erfindungsgemäßen Formmassen kann also erreicht werden, indem man

- oligomere Phosphorverbindungen der Formel (I) in Kombination mit synergetisch wirkenden feinstteiligen anorganischen Pulvern F.1
  oder

- oligomere Phosphorverbindungen der Formel (I) in Kombination mit Monophosphorbindungen F.2 der Formel oder wenn besonders hohe Anforderungen an den Flammschutz gestellt werden

- oligomere Phosphorverbindungen der Formel (I) in Kombination mit synergistisch wirkenden feinstteiligen anorganischem Pulver F.1 und mit Monophosphorverbindungen F.2 der Formel (IA)

einsetzt.

Die erfindungsgemäßen Formmassen können darüber hinaus wenigstens eines der üblichen Additive, wie Gleit- und Entformungsmittel, Nukleiermittel, Antistatika, Stabilisatoren sowie Farbstoffe, Pigmente und/oder Verstärkungsmaterialien enthalten. Als anorganische Verstärkungsmaterialien kommen Glasfasern, gegebenenfalls geschnitten oder gemahlen, Glasperlen, Glaskugeln, blättchenförmiges Verstärkungsmaterial, wie Kaolin, Talk, Glimmer, Mika, Kohlefasern in Frage. Vorzugsweise werden als Verstärkungsmaterial geschnittene oder gemahlene Glasfasern, vorzugsweise mit einer Länge von 1 bis 10 mm und einem Durchmesser von <120 µm in einer Menge von 1 bis 40 Gew.-Teilen eingesetzt; vorzugsweise sind die Glasfasern oberflächenbehandelt.

Die erfindungsgemäßen Formmassen enthaltend die Komponenten A bis F und gegebenenfalls weitere bekannte Zusätze wie Stabilisatoren, Farbstoffe, Pigmente, Gleit- und Entformungsmitel, sowie Antistatika und Verstärkungsmaterialien, werden hergestellt, indem man die jeweiligen Bestandteile in bekannter Weise vermischt und bei Temperaturen von 200°C bis 300°C in üblichen Aggregaten wie Innenknetem, Extrudern und Doppelwellenschnecken schmelzcompoundiert und schmelzextrudiert, wobei die Komponente E vorzugsweise in Form der bereits erwähnten koagulierten Mischung eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpem jeder Art verwendet werden. Insbesondere können Formkörper durch Spritzguß hergestellt werden. Beispiele für herstellbare Formkörper sind: Gehäuseteile jeder Art, z.B. für Haushaltsgeräte wie Saftpressen, Kaffeemaschinen, Mixer, für Büromaschinen wie Kopierer, Drucker oder Monitore, oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Eine weitere Form der Verarbeitung ist die Herstellung von Formkörpem durch Tiefziehen aus vorher hergestellten Platten oder Folien.

Besonders geeignet sind die Formmassen zur Herstellung von Formteilen, wo besonders hohe Ansprüche an die Flammwidrigkeit der eingesetzten Kunststoffe gestellt werden.

Ein weiterer Gegenstand der vorliegenden Erfindung ist daher auch die Verwendung der erfindungsgemäßen Formmassen zur Herstellung von Formkörpern jeglicher Art, vorzugsweise der obengenannten, sowie die Formkörper aus den erfindungsgemäßen Formmassen.

**Beispiele**

**Komponente A**

Lineares Polycarbonat auf Basis Bisphenol A mit einer relativen Lösungsviskosität von 1,252, gemessen in $CH_2Cl_2$ als Lösungsmittel bei 25°C und in einer Konzentration von 0,5 g/ 100 ml.

**Komponente B**

Pfropfpolymerisat von 40 Gew.-Teilen eines Copolymerisats aus Styrol und Acrylnitril im Verhältnis von 73: 27 auf 60 Gew.-Teile teilchenförmigen vernetzten Polybutadienkautschuk (mittlerer Teilchendurchmesser $d_{50}$ = 0,3 µm), hergestellt durch Emulsionspolymerisation.

**Komponente C**

Styrol/Acrylnitril-Copolymerisat mit einem Styrol/Acrylnitril-Verhältnis von 72:28 und einer Grenzviskosität von 0,55 dl/g (Messung in Dimethylformamid bei 20°C).

**Komponente D**

Oligophosphat von m-Phenylen-bis(di-phenyl-phosphat) mit N = 7.

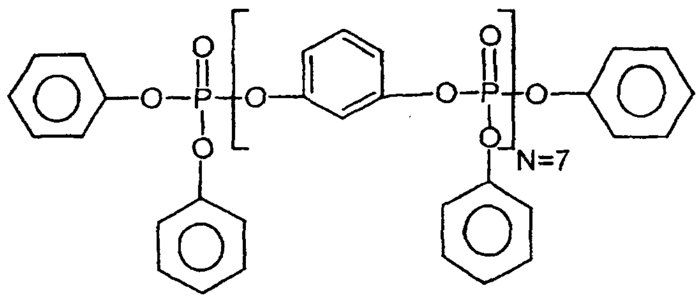

**Komponente E**

Tetrafluorethylenpolymerisat als koagulierte Mischung aus einer SAN-Pfropfpolymerisat-Emulsion gemäß B in Wasser und einer Tetrafluorethylenpolymerisat-Emulsion in Wasser. Das Gewichtsverhältnis Pfropfpolymerisat B zum Tetrafluorethylenpolymerisat E in der Mischung ist 90 Gew.-% zu 10 Gew.-%. Die Tetrafluorethylenpolymerisat-Emulsion besitzt einen Feststoffgehalt von 60 Gew.-%, der mittlere Teilchendurchmesser liegt zwischen 0,05 und 0,5 µm. Die SAN-Pfropfpolymerisat-Emulsion besitzt einen Feststoffgehalt von 34 Gew.-% und einen mittleren Latexteilchendurchmesser von 0,4 µm.

**Herstellung von E**

Die Emulsion des Tetrafluorethylenpolymerisats (Teflon 30 N der Fa. DuPont) wird mit der Emulsion des SAN-Pfropfpolymerisats B vermischt und mit 1,8 Gew.-%, bezogen auf Polymerfeststoff, phenolischer Antioxidantien stabilisiert. Bei 85 bis 95°C wird die Mischung mit einer wäßrigen Lösung von $MgSO_4$ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

**Komponente F**

F.1 Pural 200, ein Aluminiumoxidhydroxid (Fa. Condea, Hamburg, Deutschland) mittlere Teilchengröße ca. 50 nm
F.2 Triphenylphosphat, Disflamoll TP der Fa. Bayer AG, Leverkusen, Deutschland.

**Herstellung und Prüfung der erfindungsgemäßen Formmassen**

Das Mischen der Komponenten A bis F erfolgte auf einem 3-l-Innenkneter. Die Formkörper wurden auf einer Spritzgießmaschine Typ Arburg 270 E bei 260°C hergestellt.

Die Bestimmung der Kerbschlagzähigkeit erfolgt nach Methode ISO 180 1A an Stäben der Abmessung 80x10x4 $nm^3$ bei Raumtemperatur.

Die Flammfestigkeit wird nach UL 94V bestimmt.

Die Zusammensetzung der geprüften Materialien sowie die erhaltenen Daten sind in der folgenden Tabelle zusammengefaßt.

Tabelle 1

| Zusammensetzung und Eigenschaften der Polycarbonat-ABS-Formmassen | | | | |
|---|---|---|---|---|
| Beispiel | 1 Vergleich | 2 | 3 | 4 |
| Komponenten (Gew.-Teile) | | | | |
| A | 66,7 | 66,7 | 66,7 | 66,7 |
| B | 7,3 | 7,3 | 7,3 | 7,3 |
| C | 9,4 | 9,4 | 9,4 | 9,4 |
| D | 12,0 | 12,0 | 9,0 | 9,0 |
| E | 4,2 | 4,2 | 4,2 | 4,2 |
| F.1 | - | 0,75 | - | 0,75 |
| F.2 | - | - | 3,0 | 3,0 |
| Eigenschaften: | | | | |
| ak (ISO 1801A[kJ/m]) | 15 | 18 | 55 | 62 |
| UL 94 V 3,2 mm | | | | |
| Bewertung | n.B. | V1 | VO | VO |
| Gesamt NBZ* (s) | 136 | 39 | 22 | 26 |
| UL 94 V 1,6 mm | | | | |
| Bewertung | n.B. | V1 | VO | VO |
| Gesamt NBZ*(s) | 266 | 53 | 27 | 22 |

* NBZ = Nachbrennzeit

Aus der Tabelle geht die überraschende Verbesserung der Flammfestigkeit und der mechanischen Eigenschaften durch Einsatz der erfindungsgemäßen Flammschutzmittelkombination hervor.

**Patentansprüche**

**1.** Flammwidrige thermoplastische Formmassen enthaltend

A. 5 bis 95 Gew.-Teile eines aromatischen Polycarbonats oder Polyestercarbonats

B. 0,5 bis 60 Gew.-Teile wenigstens eines Pfropfpolymerisats von

B.1 5 bis 95 Gew.-% eines oder mehrerer Vinylmonomeren auf

B.2 95 bis 5 Gew.-% einer oder mehrerer Pfropfgrundlagen mit einer Glasumwandlungstemperatur <10°C

C. 0 bis 45 Gew.-Teile thermoplastisches Vinylcopolymerisat,

D. 0,5 bis 20 Gew.-Teile wenigstens einer Phosphorverbindung der allgemeinen Formel (I)

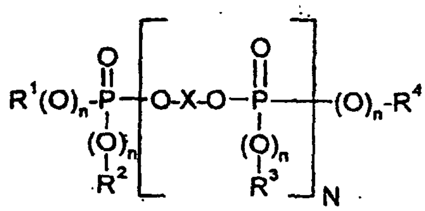

(I)

worin

| | |
|---|---|
| $R^1$, $R^2$, $R^3$ und $R^4$ | unabhängig voneinander, jeweils gegebenenfalls halogeniertes $C_1$- bis $C_8$-Alkyl, $C_5$- bis $C_6$-Cycloalkyl, $C_6$- bis $C_{20}$-Aryl oder $C_7$- bis $C_{12}$-Aralkyl, |
| n | unabhängig voneinander 0 oder 1, |
| N | eine durchschnittliche Zahl von 5 bis 30 ist, |
| X | für einen ein- oder mehrkernigen aromatischen Rest mit 6 bis 30 C-Atomen steht, |

E 0 bis 5 Gew.-Teile eines fluorierten Polyolefins, und

F.1 0,5 bis 40 Gew.-Teilen eines feinstteiligen anorganischen Pulvers mit einem durchschnittlichen Teilchendurchmesser kleiner gleich 200 nm und

F.2 0,5 bis 20 Gew.-Teilen einer Monophosphorverbindung der Formel (IA)

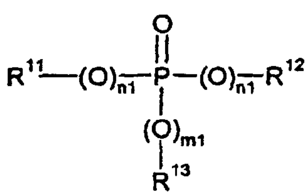

(IA),

worin

| | |
|---|---|
| $R^{11}$, $R^{12}$ und $R^{13}$ | unabhängig voneinander gegebenenfalls halogeniertes $C_1$-$C_8$-Alkyl oder gegebenenfalls halogeniertes $C_6$-$C_{20}$-Aryl, |
| m1 | 0 oder 1 und |
| n1 | 0 oder 1 bedeuten, |

wobei die Summe der Gew.-Teile aller Komponenten 100 ergibt.

**2.** Flammwidrige thermoplastische Formmassen enthaltend

A. 5 bis 95 Gew.-Teile eines aromatischen Polycarbonats oder Polyestercarbonats ,

B. 0,5 bis 60 Gew.-Teile wenigstens eines Pfropfpolymerisats von

B.1 5 bis 95 Gew.-% eines oder mehrerer Vinylmonomeren auf

B.2 95 bis 5 Gew.-% einer oder mehrerer Pfropfgrundlagen mit einer Glasumwandlungstemperatur <10°C

C. 0 bis 45 Gew.-Teile thermoplastisches Vinylcopolymerisat,

D. 0,5 bis 20 Gew.-Teile wenigstens einer Phosphorverbindung der allgemeinen Formel (I)

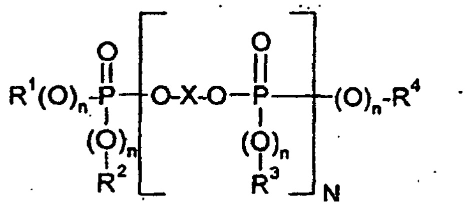

(I)

worin

| | |
|---|---|
| $R^1$, $R^2$, $R^3$ und $R^4$ | unabhängig voneinander, jeweils gegebenenfalls halogeniertes $C_1$- bis $C_8$-Alkyl, $C_5$- bis $C_6$-Cycloalkyl, $C_6$- bis $C_{20}$-Aryl oder $C_7$- bis $C_{12}$-Aralkyl, |
| n | unabhängig voneinander 0 oder 1, |
| N | eine durchschnittliche Zahl von 5,5 bis 30 ist, |
| X | für einen ein- oder mehrkernigen aromatischen Rest mit 6 bis 30 C-Atomen steht, |

E 0 bis 5 Gew.-Teile eines fluorierten Polyolefins, und

F.1 0,5 bis 40 Gew.-Teilen eines feinstteiligen anorganischen Pulvers mit einem durchschnittlichen Teilchendurchmesser kleiner gleich 200 nm oder

F.2 0,5 bis 20 Gew.-Teilen einer Monophosphorverbindung der Formel (IA)

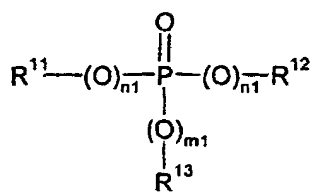

(IA),

worin

| | |
|---|---|
| $R^{11}$, $R^{12}$ und $R^{13}$ | unabhängig voneinander gegebenenfalls halogeniertes $C_1$-$C_8$-Alkyl oder gegebenenfalls halogeniertes $C_6$-$C_{20}$-Aryl, |
| m1 | 0 oder 1 und |
| n1 | 0 oder 1 bedeuten, |

wobei die Summe der Gew.-Teile aller Komponenten 100 ergibt.

**3.** Formmassen nach Anspruch 1, wobei die Phosphorverbindungen der Formel (I) ein durchschnittliches N von 5,5 bis 20 aufweisen.

**4.** Formmassen nach einem der Ansprüche 1 bis 2, wobei in Formel (I) $R^1$ bis $R^4$ jeweils unabhängig voneinander ein gegebenenfalls bromierter oder chlorierter Kresyl-, Phenyl-, Xylenyl-, Propylphenyl- oder Butylphenylrest bedeutet und X sich von Bisphenol A, Resorcin oder Hydrochinon, gegebenenfalls chloriert oder bromiert, ableitet.

**5.** Formmassen gemäß Anspruch 1 oder 2, wobei X in Formel (I) sich von Diphenolen der Formel (II) ableitet:

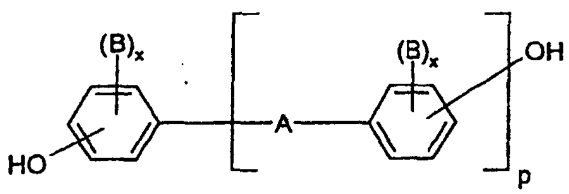

(II)

wobei

A eine Einfachbindung, $C_1$-$C_5$-Alkylen, $C_2$-$C_5$-Alkyliden, $C_5$-$C_6$-Cyclo-alkyliden, -O-, -SO-, -CO-, -S-, -$SO_2$-, ein $C_6$-$C_{12}$-Arylenrest, der mit weiteren gegebenenfalls Heteroatome enthaltenden Ringen kondensiert sein kann, ein Rest der Formel. (III)

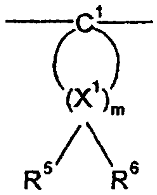

(III)

oder ein Rest der Formel (IV)

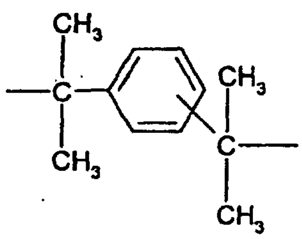

(IV)

die Reste B, unabhängig voneinander, jeweils einen $C_1$-$C_8$-Alkylrest, Halogen, einen $C_6$-$C_{10}$-Aryl-, $C_7$-$C_{12}$-Aralkyl-Rest bedeuten,

x jeweils unabhängig voneinander 0, 1 oder 2,

p 1 oder 0 sind, und

$R^5$ und $R^6$ für jedes $X^1$ individuell wählbar, unabhängig voneinander Wasserstoff oder $C_1$-$C_6$-Alkyl,

$X^1$ Kohlenstoff und

m eine ganze Zahl von 4 bis 7 bedeutet, mit der Maßgabe, daß an mindestens einem Atom $X^1$, $R^5$ und $R^6$ gleichzeitig Alkyl sind.

**6.** Formmassen nach einem der Ansprüche 1 bis 5, wobei die Monophosphorverbindung F.2 der Formel (IA) ausgewählt ist aus mindestens einer der Verbindungen Tributylphosphat, Tris-(2-chlorethyl)-phosphat, Tris-(2,3-dibrompropyl)-phosphat, Triphenylphosphat, Trikresylphosphat, Diphenyltwesylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid oder Trikresylphosphinoxid.

**7.** Formmassen nach einem der Ansprüche 1 bis 6, enthaltend als Komponente F.1 Verbindungen eines der Metalle der 1. bis 5. Hauptgruppe oder der 1. bis 8. Nebengruppe des Periodensystems mit dem Element Sauerstoff, Schwefel, bor, Kohlenstoff, Phosphor, Stickstoff, Wasserstoff, oder Silicium oder deren Mischungen.

**8.** Formmassen nach Anspruch 7, enthaltend als Komponente F.1 Verbindungen von wenigstens einem der Metalle der 2. bis 5. Hauptgruppe oder der 4. bis 8. Nebengruppe mit dem Element Sauerstoff, Schwefel, Bor, Kohlenstoff, Phosphor, Stickstoff, Wasserstoff, Silicium bzw. deren Mischungen.

**9.** Formmassen nach Anspruch 8, wobei Komponente F.1 ein Oxid, Hydroxid oder Phosphat ist.

**10.** Formmassen nach Anspruch 9, wobei Komponente F.1 ausgewählt ist aus mindestens einer der Verbindungen $TiO_2$, $SiO_2$, $SnO_2$, ZnO, Böhmit, $ZrO_2$, $Al_2O_3$, Aluminiumphosphate, Eisenoxide, deren Mischungen und dotierte Verbindungen.

**11.** Formmassen nach Anspruch 10, wobei Komponente F.1 Böhmit oder $TiO_2$ ist.

**12.** Formmassen nach einem der Ansprüche 1 bis 11, wobei das anorganische Pulver F.1 einen durchschnittlichen Teilchendurchmesser kleiner gleich 200 nm aufweist.

**13.** Formmassen nach einem der Ansprüche 1 bis 12 enthaltend 30 bis 90 Gew.-Teile der Komponente A, 1 bis 40 Gew.-Teile der Komponente B, 0 bis 30 Gew.-Teile der Komponente C, 1 bis 18 Gew.-Teile der Komponente D und 1 bis 25 Gew.-Teile der Komponente F.1 und/oder 1 bis 18 Gew.-Teile F.2.

**14.** Formmassen nach einem der Ansprüche 1 bis 13, enthaltend 50 bis 80 Gew.-Teile der Komponente A, 2 bis 25 Gew.-Teile der Komponente B, 2 bis 25 Gew.-Teile der Komponente C, 2 bis 15 Gew.-Teile der Komponente D und 2 bis 15 Gew.-Teile der Komponente F.1 und/oder 2 bis 15 Gew.-Teile der Komponente F.2.

**15.** Formmassen nach einem der Ansprüche 1 bis 14, wobei das Gewichtsverhältnis der Komponenten B:C zwischen 2:1 und 1:4, liegt.

**16.** Formmassen nach einem der Ansprüche 1 bis 15, **dadurch gekennzeichnet, daß** die Pfropfgrundlage B.2 ein Dienkautschuk, Acrylatkautschuk, Silikonkautschuk oder Ethylen-Propylen-Dien-Kautschuk ist.

**17.** Formmassen nach einem der Ansprüche 1 bis 16, **dadurch gekennzeichnet, daß** sie mindestens einen Zusatz aus der Gruppe der Stabilisatoren, Pigmente, Entformungsmittel, Fließhilfsmittel, anorganische Verstärkungsmaterialien und/oder Antistatika enthalten.

**18.** Verwendung der Formmassen nach einem der Ansprüche 1 bis 17 zur Herstellung von Formkörpern.

**19.** Formkörper hergestellt aus Formmassen nach einem der Ansprüche 1 bis 17.

## Claims

**1.** A flame- retardant thermoplastic moulding composition containing

A. 5 to 95 parts by weight of an aromatic polycarbonate or polyestercarbonate

B. 0.5 to 60 parts by weight of at least one graft polymer of

B.1 5 to 95 wt.% of one or more vinyl monomers on

B.2 95 to 5 wt.% of one or more graft substrates with a glass transition temperature $<10°C$

C. 0 to 45 parts by weight of a thermoplastic vinyl copolymer,

D. 0.5 to 20 parts by weight of at least one phosphorus compound of general formula (I)

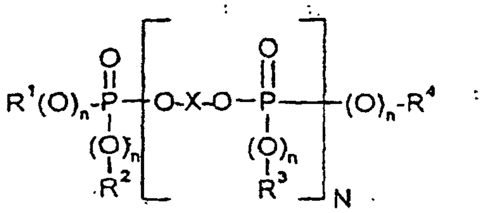

(I)

wherein
$R^1$, $R^2$, $R^3$, and $R^4$, independently of each other, each represent $C_1$- to $C_8$-alkyl, $C_5$- to $C_6$-cycloalkyl, $C_6$- to $C_{20}$-aryl or $C_7$- to $C_{12}$-aralkyl, which are optionally halogenated,

n represents 0 or 1, which are independent of each other,

N is an average number from 5 to 30,

X represents a mono- or polynuclear aromatic radical containing 6 to 30 carbon atoms,

E 0 to 5 parts by weight of a fluorinated polyolefin, and

F.1 0.5 to 40 parts by weight of a very finely divided inorganic powder with an average particle diameter of less than or equal to 200 nm, and

F.2 0.5 to 20 parts by weight of a monophosphorus compound of formula (IA)

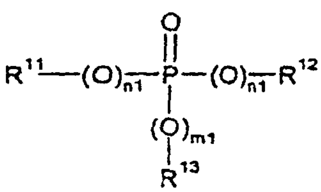

(IA)

wherein
$R^{11}$, $R^{12}$ and $R^{13}$, independently of each other, denote $C_1$-$C_8$-alkyl, which is optionally halogenated, or $C_6$-$C_{20}$-aryl, which is optionally halogenated,

ml denotes 0 or 1, and

nl denotes 0 or 1,

wherein the sum of all the parts by weight of all the components is 100.

**2.** A flame- retardant thermoplastic moulding composition containing

A. 5 to 95 parts by weight of an aromatic polycarbonate or polyestercarbonate

B. 0.5 to 60 parts by weight of at least one graft polymer of

B.1 5 to 95 wt.% of one or more vinyl monomers on

B.2 95 to 5 wt.% of one or more graft substrates with a glass transition temperature <10°C

C. 0 to 45 parts by weight of a thermoplastic vinyl copolymer,

D. 0.5 to 20 parts by weight of at least one phosphorus compound of general formula (I)

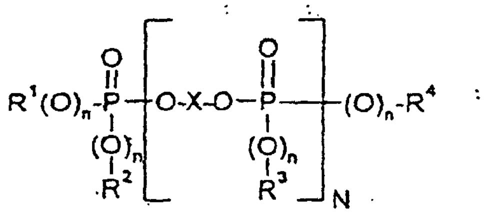

(I)

wherein
$R^1$, $R^2$, $R^3$, and $R^4$, independently of each other, each represent $C_1$- to $C_8$-alkyl, $C_5$- to $C_6$-cycloalkyl, $C_6$- to $C_{20}$-aryl or $C_7$- to $C_{12}$-aralkyl, which are optionally halogenated,

n represents 0 or 1, which are independent of each other,

N is an average number from 5.5 to 30,

X represents a mono- or polynuclear aromatic radical containing 6 to 30 carbon atoms,

E 0 to 5 parts by weight of a fluorinated polyolefin, and

F.1 0.5 to 40 parts by weight of a very finely divided inorganic powder with an average particle diameter of less than or equal to 200 nm, or

F.2 0.5 to 20 parts by weight of a monophosphorus compound of formula (IA)

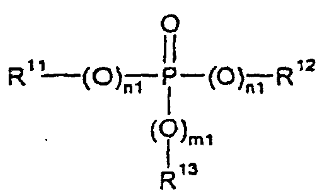

(IA)

wherein
$R^{11}$, $R^{12}$ and $R^{13}$, independently of each other, denote $C_1$-$C_8$-alkyl, which is optionally halogenated, or $C_6$-$C_{20}$-aryl, which is optionally halogenated,

ml denotes 0 or 1, and

nl denotes 0 or 1,

wherein the sum of all the parts by weight of all the components is 100.

**3.** A moulding composition according to Claim 1, wherein the phosphorus compounds of formula (I) have an average N of 5.5 to 20.

**4.** A moulding composition according to one of Claims 1 to 2, wherein in formula (I) $R^1$ to $R^4$ each denote, independently of each other, a cresyl, phenyl, xylenyl, propylphenyl or butylphenyl radical which is optionally brominated or chlorinated, and X is derived from bisphenol A, resorcinol or hydroquinone, which are optionally chlorinated or brominated.

**5.** A moulding composition according to Claim 1 or 2, wherein X in formula (I) is derived from diphenols of the formula (II)

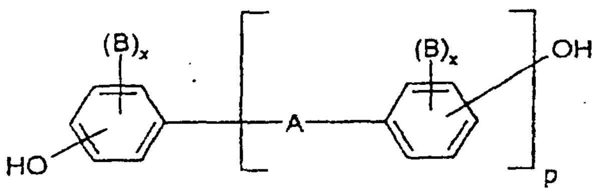

(II)

wherein

A denotes a single bond, a $C_1$-$C_5$ alkylene, $C_2$-$C_5$ alkylidene, $C_5$-$C_6$ cycloalkylidene, -O-, -SO-, -CO- , -S-, $-SO_2-$ a $C_6$-$C_{12}$-arylene radical, which can be condensed with other rings which optionally contain heteroatoms, a radical of formula (III)

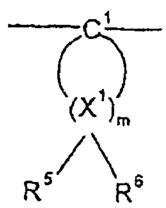

(III)

or a radical of formula (IV)

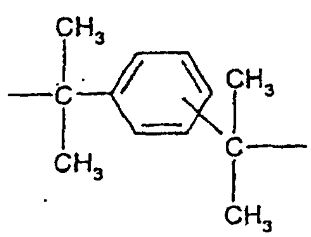

(IV)

radicals B, independent of each other, each denote a $C_1$-$C_8$ alkyl radical, a halogen, a $C_6$-$C_{10}$-aryl radical, or a $C_7$-$C_{12}$-aralkyl radical,

x denotes 0.1 or 2, which are independent of each other in each case,

p is 1 or 0, and

$R^5$ and $R^6$ can be selected individually and independently of each other for each $X^1$, and denote hydrogen or $C_1$-$C_6$-alkyl,

$X^1$ denotes carbon, and

m denotes an integer from 4 to 7, with the proviso that $R^5$ and $R^6$ simultaneously denote alkyl on at least one $X^1$ atom.

**6.** A moulding composition according to one of Claims 1 to 5, wherein the monophosphorus compound F.2 of formula (IA) is selected from at least of the compounds tributyl phosphate, tris-(2-chloroethyl) phosphate, tris-(2,3-dibromopropyl) phosphate, triphenyl phosphate, tricresyl phosphate, diphenylcresyl phosphate, diphenyloctyl phosphate, diphenyl-2-ethylcresyl phosphate, tri-(isopropylphenyl) phosphate, a halogen-substituted aryl phosphate, methylphosphonic acid dimethyl ester, methylphosphonic acid diphenyl ester, phenylphosphonic acid diethyl ester, triphenylphosphine oxide or tricresylphosphine oxide.

**7.** A moulding composition according to one of Claims 1 to 6, containing, as component F.1, compounds of one of the metals of the 1st to 5th main groups or of the 1st to 8th sub-groups of the periodic table with the elements oxygen, sulfur, boron, carbon, phosphorus, nitrogen, hydrogen, or silicon or mixtures thereof.

**8.** A moulding composition according to Claim 7, containing, as component F.1, compounds of at least one of the metals of the 2nd to 5th main groups or of the 4th to 8th sub-group of the periodic table with the elements oxygen, sulfur, boron, carbon, phosphorus, nitrogen, hydrogen or silicon or mixtures thereof.

**9.** A moulding composition according to Claim 8, wherein component F.1 is an oxide, hydroxide or phosphate.

**10.** A moulding composition according to Claim 9, wherein component F.1 is selected from at least one of the compounds $TiO_2$, $SiO_2$, $SnO_2$, ZnO, boehmite, $ZrO_2$, $Al_2O_3$, aluminium phosphate, iron oxides and mixtures and doped compounds thereof.

**11.** A moulding composition according to Claim 10, wherein component F.1 is boehmite or $TiO_2$.

**12.** A moulding composition according to one of Claims 1 to 11, wherein inorganic powder F.1 has an average particle diameter less than or equal to 200 nm.

**13.** A moulding composition according to one of Claims 1 to 12, containing 30 to 90 parts by weight of component A, 1 to 40 parts by weight of component B, 0 to 30 parts by weight of component C, 1 to 18 parts by weight of component D and 1 to 25 parts by weight of component F.1 and/or 1 to 18 parts by weight of F.2.

**14.** A moulding composition according to one of Claims 1 to 13, containing 50 to 80 parts by weight of component A, 2 to 25 parts by weight of component B, 2 to 25 parts by weight of component C, 2 to 15 parts by weight of component D and 2 to 15 parts by weight of component F.1 and/or 2 to 15 parts by weight of component F.2.

**15.** A moulding composition according to one of Claims 1 to 14, wherein the ratio by weight of components B:C is between 2:1 and 1:4.

**16.** A moulding composition according to one of Claims 1 to 15, **characterised in that** graft substrate B.2 is a diene rubber, an acrylate rubber, a silicone rubber or an ethylene-propylene-diene rubber.

**17.** A moulding composition according to one of Claims 1 to 16, **characterised in that** they contain at least one additive from the group comprising stabilisers, pigments, demoulding agents, flow enhancers, inorganic reinforcing materials and/or antistatic agents.

**18.** The use of the moulding compositions according to one of Claims 1 to 17 for the production of a moulded article.

**19.** A moulded article produced from a moulding composition according to one of Claims 1 to 17.

**Revendications**

**1.** Masses à mouler thermoplastiques ignifugées contenant :

A. 5 à 95 parts en poids d'un polycarbonate ou polyestercarbonate aromatique

B. 0,5 à 60 parts en poids d'au moins un polymère greffé de

B.1 5 à 95% en poids d'un ou plusieurs monomères vinyliques sur

B.2 95 à 5% en poids d'une ou plusieurs bases de greffage avec une température de transition vitreuse $< 10°C$

C. 0 à 45 parts en poids d'un copolymère vinylique thermoplastique,

D. 0,5 à 20 parts en poids d'au moins un composé phosphoré de formule générale (I)

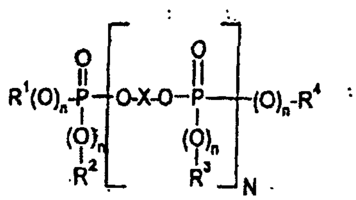

(I)

dans laquelle
$R^1$, $R^2$, $R^3$ et $R^4$ désignent, indépendamment l'un de l'autre, un radical $C_1$-$C_8$-alkyle, $C_5$-$C_6$-cycloalkyle, $C_6$-$C_{20}$-aryle ou $C_7$-$C_{12}$-aralkyle, éventuellement halogéné,

n désigne 0 ou 1, indépendamment l'un de l'autre,

N est un nombre moyen de 5 à 30,

X désigne un reste aromatique à un ou plusieurs noyaux avec 6 à 30 atomes C,

E 0 à 5 parts en poids d'une polyoléfine fluorée et

F.1 0,5 à 40 parts en poids d'une poudre inorganique en très petites particules avec un diamètre moyen des particules inférieur ou égal à 200 nm et

F.2 0,5 à 20 parts en poids d'un composé monophosphoré de formule (IA)

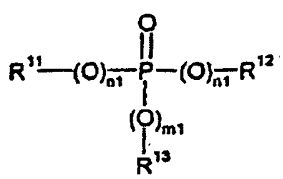

(IA),

dans laquelle

$R^{11}$, $R^{12}$ et $R^{13}$ désignent, indépendamment l'un de l'autre, un radical $C_1$-$C_8$-alkyle éventuellement halogéné ou un radical $C_6$-$C_{20}$-aryle éventuellement halogéné,

m1 désigne 0 ou 1 et

n1 désigne 0 ou 1,

la somme des parts en poids de tous les composants donnant 100.

**2.** Masses à mouler thermoplastiques ignifugées contenant :

A. 5 à 95 parts en poids d'un polycarbonate ou polyestercarbonate aromatique

B. 0,5 à 60 parts en poids d'au moins un polymère greffé de

B.1 5 à 95% en poids d'un ou plusieurs monomères vinyliques sur

B.2 95 à 5% en poids d'une ou plusieurs bases de greffage avec une température de transition vitreuse <

10°C

C. 0 à 45 parts en poids d'un copolymère vinylique thermoplastique,

D. 0,5 à 20 parts en poids d'au moins un composé phosphoré de formule générale (I)

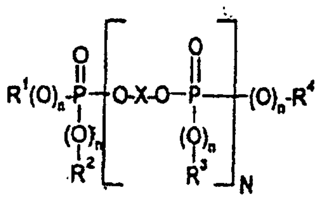

(I)

dans laquelle

| | |
|---|---|
| $R^1$, $R^2$, $R^3$ et $R^4$ | désignent, indépendamment l'un de l'autre, un radical $C_1$-$C_8$-alkyle, $C_5$-$C_6$-cycloalkyle, $C_6$-$C_{20}$-aryle ou $C_7$-$C_{12}$-aralkyle, éventuellement halogéné, |
| n | désigne 0 ou 1, indépendamment l'un de l'autre, |
| N | est un nombre moyen de 5,5 à 30, |
| X | désigne un reste aromatique à un ou plusieurs noyaux avec 6 à 30 atomes C, |

E 0 à 5 parts en poids d'une polyoléfine fluorée et

F.1 0,5 à 40 parts en poids d'une poudre inorganique en très petites particules avec un diamètre moyen des particules inférieur ou égal à 200 nm ou

F.2 0,5 à 20 parts en poids d'un composé monophosphoré de formule (IA)

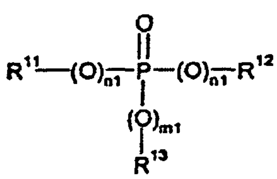

(IA),

dans laquelle

| | |
|---|---|
| $R^{11}$, $R^{12}$ et $R^{13}$ | désignent, indépendamment l'un de l'autre, un radical $C_1$-$C_8$-alkyle éventuellement halogéné ou un radical $C_6$-$C_{20}$-aryle éventuellement halogéné, |
| m1 | désigne 0 ou 1 et |
| n1 | désigne 0 ou 1, |

la somme des parts en poids de tous les composants donnant 100.

**3.** Masses à mouler selon la revendication 1, dans lesquelles les composés phosphorés de formule (I) présentent un N moyen de 5,5 à 20.

**4.** Masses à mouler selon l'une des revendications 1 à 2, dans lesquelles dans la formule (I) $R^1$ à $R^4$ désignent, indépendamment l'un de l'autre, un reste crésyle, phényle, xylényle, propylphényle ou butylphényle, éventuellement bromé ou chloré et X est dérivé du bisphénol A, de la résorcine ou de l'hydroquinone, éventuellement chloré ou bromé.

**5.** Masses à mouler selon l'une des revendications 1 ou 2, dans lesquelles X dans la formule (I) est dérivé de diphénols de formule (II) :

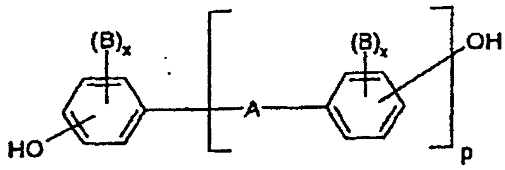

(II)

dans laquelle
A désigne une liaison simple, un radical $C_1$-$C_5$-alkylène, $C_2$-$C_5$-alkylidène, $C_5$-$C_6$-cycloalkylidène, -O-, -SO-, -CO-, -S-, -$SO_2$-, un reste $C_6$-$C_{12}$-arylène qui peut être condensé avec d'autres cycles contenant éventuellement des hétéroatomes, un reste de formule (III)

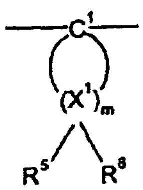

(III)

ou un reste de formule (IV)

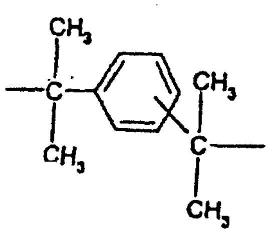

(IV)

les restes B désignent respectivement, indépendamment l'un de l'autre, un résidu $C_1$-$C_8$-alkyle, un halogène, un reste $C_6$-$C_{10}$-aryle ou $C_7$-$C_{12}$-aralkyle,

x désignent respectivement, indépendamment l'un de l'autre, 0, 1 ou 2,

p désigne 1 ou 0 et

$R^5$ et $R^6$ désignent, indépendamment l'un de l'autre, l'hydrogène ou un radical $C_1$-$C_6$-alkyle, pour chaque $X^1$ sélectionnable individuellement,

$X^1$ désigne le carbone et

m désigne un nombre entier de 4 à 7 étant entendu que $R^5$ et $R^6$ sont simultanément un radical alkyle, sur au moins un atome $X^1$.

**6.** Masses à mouler selon l'une des revendications 1 à 5, où le composé monophosphoré F.2 de formule (IA) est sélectionné à partir d'au moins un des composés tributylphosphate, tris-(2-chloréthyl)-phosphate, tris-(2,3-dibromopropyl)-phosphate, triphénylphosphate, tricrésylphosphate, diphénylcrésylphosphate, diphényloctylphosphate, diphényl-2-éthylcrésylphosphate, tri-(isopropylphényl)-phosphate, arylphosphates halogénosubstitués, diméthylester d'acide méthylphosphonique, diphénylester d'acide méthylphosphonique, diéthylester d'acide phénylphosphonique, phosphinoxyde triphénylique ou phosphinoxyde tricrésylique.

**7.** Masses à mouler selon l'une des revendications 1 à 6, contenant comme composant F.1, des composés d'un des métaux du groupe principal 1 à 5 ou du sous-groupe 1 à 8 du système périodique avec l'élément oxygène, soufre, bore, carbone, phosphore, azote, hydrogène, silicium ou leurs mélanges.

**8.** Masses à mouler selon la revendication 7, contenant comme composant F.1, des composés d'au moins un des métaux des groupes principaux 2 à 5 ou des sous-groupes 4 à 8 avec l'élément oxygène, soufre, bore, carbone, phosphore, azote, hydrogène, silicium ou leurs mélanges.

**9.** Masses à mouler selon la revendication 8, dans lesquelles le composant F.1 est un oxyde, un hydroxyde ou un phosphate.

**10.** Masses à mouler selon la revendication 9, dans lesquelles le composant F.1 est sélectionné à partir d'au moins un des composés $TiO_2$, $SiO_2$, ZnO, boehmite, $ZrO_2$, $Al_2O_3$, phosphates d'aluminium, oxydes de fer, leurs mélanges et composés dopés.

**11.** Masses à mouler selon la revendication 10, dans lesquelles le composant F.1 est la boehmite ou le $TiO_2$.

**12.** Masses à mouler selon l'une des revendications 1 à 11, dans lesquelles la poudre inorganique F.1 présente un diamètre moyen des particules inférieur ou égal à 200 nm.

**13.** Masses à mouler selon l'une des revendications 1 à 12 contenant 30 à 90 parts en poids du composant A, 1 à 40 parts en poids du composant B, 0 à 30 parts en poids du composant C, 1 à 18 parts en poids du composant D et 1 à 25 parts en poids du composant F.1 et/ou 1 à 18 parts en poids du composant F.2.

**14.** Masses à mouler selon l'une des revendications 1 à 13, contenant 50 à 80 parts en poids du composant A, 2 à 25 parts en poids du composant B, 2 à 25 parts en poids du composant C, 2 à 15 parts en poids du composant D et 2 à 15 parts en poids du composant F.1 et/ou 2 à 15 parts en poids du composant F.2.

**15.** Masses à mouler selon l'une des revendications 1 à 14, dans lesquelles la proportion en poids des composants B : C se situe entre 2 : 1 et 1 : 4.

**16.** Masses à mouler selon l'une des revendications 1 à 15, **caractérisées en ce que** la base de greffage B.2 est un caoutchouc de diène, un caoutchouc d'acrylate, un caoutchouc de silicone ou un caoutchouc d'éthylène-propylènediène.

**17.** Masses à mouler selon l'une des revendications 1 à 16, **caractérisées en ce qu'**elles contiennent au moins un additif du groupe des stabilisateurs, des pigments, des agents de démoulage, des adjuvants fluidifiants, des renforçateurs inorganiques et/ou des antistatiques.

**18.** Mise en oeuvre des masses à mouler selon l'une des revendications 1 à 17 pour la préparation de corps moulés.

**19.** Corps moulés préparés à partir de masses à mouler selon l'une des revendications 1 à 17.